# EUROPEAN PATENT SPECIFICATION

(11) **EP 0 337 045 B1**
(45) Date of publication and mention of the grant of the patent: **06.07.1994**
(21) Application number: 88710006.3
(22) Date of filing: 12.04.1988
(51) Int. Cl.: H01H 25/04, B60R 1/06

(54) **Multi-position electrical switch**
Elektrischer Mehrstellungsschalter
Commutateur electrique multi-position

(43) Date of publication of application: 18.10.1989
(73) Proprietor: MURAKAMI KAIMEIDO CO., LTD, Shizuoka 422 (JP)
(72) Inventor: Nakayama,Kiyoshi, Shizuoka-shi,Shizuoka-ken 420 (JP); Yoshioka,Toshio, Fujieda-shi,Shizuoka-ken 426 (JP); Yamaguchi,Kiyotaka,c/o OMRON Tateishi Electr.Co., Kyoto-shi,Kyoto-fu 616 (JP)
(74) Representative: Riederer Freiherr von Paar zu Schönau, Anton

(56) References cited:
- EP-A- 0 102 394
- EP-A- 0 123 184
- DE-A- 3 421 319
- US-A- 4 626 085

## Description

### BACKGROUND OF THE INVENTION

### 1. Field of the art

The present invention relates to a multi-position electrical switch unit as stated in the preamble of claim 1, such switch unit being e.g. known from EP-A-0 102 394 Fig.s 22 to 27. Such multi-position electrical switches are particularly useful in the remote control of rearview mirrors of a motor vehicle.

### 2. Description of the prior art

Each of a pair of outside rearview mirrors of a motor vehicle contains two electric motors and a driving transmission in a mirror body, and the angle of each of the rearview mirrors is controlled by remote control. By operating a control switch in the compartment or the motor vehicle, adjustments are made to the direction of inclination, horizontally to the right or left, or vertically upwards or downwards. There are two types of such controllers.

One is constructed, as disclosed in U.S. Patent No. 4,349,708, in that a joystick is projected at the top of a casing, the joystick is rotatably supported by spherical supporting means in the casing, movable and stationary contact groups are disposed on the same circumference of the lower portion of the joystick, and the selected contacts are contacted by the operation of the joystick to control the normal or reverse rotation, or to stop the electric motor. However, in this type, in order to reliably open or close the contacts by the operation of the joystick, the configuration cannot be sufficiently reduced in size due to the reason that a return spring must be attached, a large number of components introduce high cost, and the reliability is not so satisfactory.

The other type is known as a controller in which a printed circuit (PC) board having a motor control circuit of a predetermined pattern, a pressure-sensitive conductive rubber sheet superposed on the PC board, and a seesaw type knob tiltable in four directions for switching the contacts of arbitrary positions on the PC board by pressing the lower conductive rubber sheet are associated.

When the knob of the controller is pressed to be tilted in any direction with respect to vertical or horizontal direction, the conductive rubber sheet at the position corresponding to the direction is pressed to close ON the contacts on the PC board, and the inclining angle of the mirror element can be adjusted by normally or reversely rotating the predetermined motor.

However, in the conventional switch of the latter type, if a hand comes in contact with the knob, the contacts are simultaneously intruded to cause an electric shortcircuit therebetween which in turn burns the mirror driving motor. When the switch is intended to be operated and the knob is pushed in the necessary direction, the opposed contact adjacent to the contact has also been simultaneously contacted with the contact so that an inconvenience occurs in the reliability of the switching operation. To eliminate such drawbacks, in US-A-4,476,356 = EP-A-0 102 394, a rod-like or crest-sectional projection used also as a fulcrum is formed at the center on the lower surface of the seesaw type, square knob body to hold an insulating distance between the movable contact and the corresponding stationary contact by the length (height) of the projection and pin-shaped stoppers are arranged at the corners of the knob to delimit the tilting angle thereof, but this cannot fully solve the drawbacks.

### SUMMARY OF THE INVENTION

Is is therefore an object of this invention to provide a multi-position electrical switch unit for actuating a rearview mirror without erroneous operation.

In order to achieve this object of the invention and to overcome the problems of the prior art, this invention provides a multi-position electrical switch unit, preferrably for controlling a rearview mirror of a motor vehicle, which switch unit is characterized in that the central projection is shaped as a cylinder, the free and face of which consists of four inclined surface sectors formed by intersecting the cylinder with an imaginary quadrangular pyramid. A preferred embodiment has a vertex angle which is the complement of the tilting angle of the knob. By this construction, the difference of the tilting angle between contacting in case of an exact tilting on one hand, and avoiding contacts in case of an interim-direction tilting on the other hand, can be more easily maintained in the design.

In the construction according to claim 3, the driver can accurately actuate the multi-position electrical switch unit for the rearview mirror from a compartment of a motor vehicle even at night. Particularly, also a cylindrical lamp container formed on the lower surface of a knob body does not disturb inclining the knob. This container is the cylinder shaped central projection which contains the light emitting element which thus is located at the center of the control knob. Light emitting elements housed within a push-buttom switch are known per se (DE-A-3421319).

In the switch unit, the movable contacts contact with the stationary contacts on the PC board upon inclining the control knob in upward direction or rightward or leftward direction to alter the vertical or horizontal angle of the mirror element of the rearview mirror. Having caused the desired contact, the knob does not incline any further. If the knob is inclined by the driver irregularly in a tilting direction inbetween of two switching tilting directions, erroneous operation is prevented since the crests between the surface sectors and the stoppers stopp tilting already before reaching the contacting condition.

The switch unit of this invention may have, in addition to the switch element for adjusting the rearview mirror angle as described above, a switch element for selecting the right or the left rearview mirror and a switch element for folding the mirror bodies.

The insulating rubber sheet may have hollow truncated conical swells provided with the movable contacts. Two first swells are provided at every four sides of the knob, that is, eight first swells in total are provided concentrically below the control knob. Two second swells are formed for folding the rearview mirror bodies.

The knob of a slide switch for selecting the right or the left side rearview mirror is actuated to select either the right or left side rearview mirror, thereafter the control knob is inclined to depress the movable contact of the pressed side downwardly and the stationary contact on the PC board is closed to adjust the tilting angle of the rearview mirror in the horizontal or the vertical direction by driving the electric motor in the rearview mirror body. The motor is driven while the control knob is being pressed continuously. If the pressing of the control knob is released, the swell is recovered to float the movable contact and the motor is stopped by opening the circuit, thereby it is possible to adjust arbitrarily the inclining angle. The mirror folding switch is connected to a motor driven folding control unit. This switch is an automatic return one-push type switch. The knob of the switch is inclined in either resetting or setting direction to press the movable contact and to close the stationary contact. Then, the contacts are self-held by the control unit to drive the motor from erecting to folding or vice versa, and the motor is then stopped by the operation of a limit switch.

### BRIEF DESCRIPTION OF THE DRAWINGS

Advantages of the present invention will become more apparent from the following description of preferred embodiments taken in conjunction with the accompanying drawings, in which
Fig. 1 is a top view of a control switch according to a preferred embodiment of the present invention;
Fig. 2 is an elevational view of the switch of Fig. 1;
Fig. 3 is a right side view of the switch of Fig. 1;
Fig. 4 is a bottom view;
Fig. 5 is a sectional view taken along the line V - V of Fig. 1;
Fig. 6 is a sectional view taken along the line VI - VI of Fig. 1;
Fig. 7 is a sectional view taken along the line VII - VII of Fig. 1;
Fig. 8 is a vertical part-sectional side view of an insulating rubber sheet;
Fig. 9 is a bottom view of the insulating rubber sheet;
Fig. 10 is a bottom view of a modified embodiment of the control knob in this invention;
Fig. 11 is a perspective view of the control knob of Fig. 10, presenting its bottom face;
Fig. 12 is an enlarged sectional view showing the relationship between the control knob of Fig. 10 and the contact of the insulating rubber sheet;
Fig. 13 is an enlarged sectional view showing the actuated condition of the control knob shown in Fig. 12; and
Fig. 14 shows an electric circuit diagram in case that the control switch of this invention is applied to the operating switch of the foldable rearview mirror.

### DESCRIPTION OF THE PREFERRED EMBODIMENTS

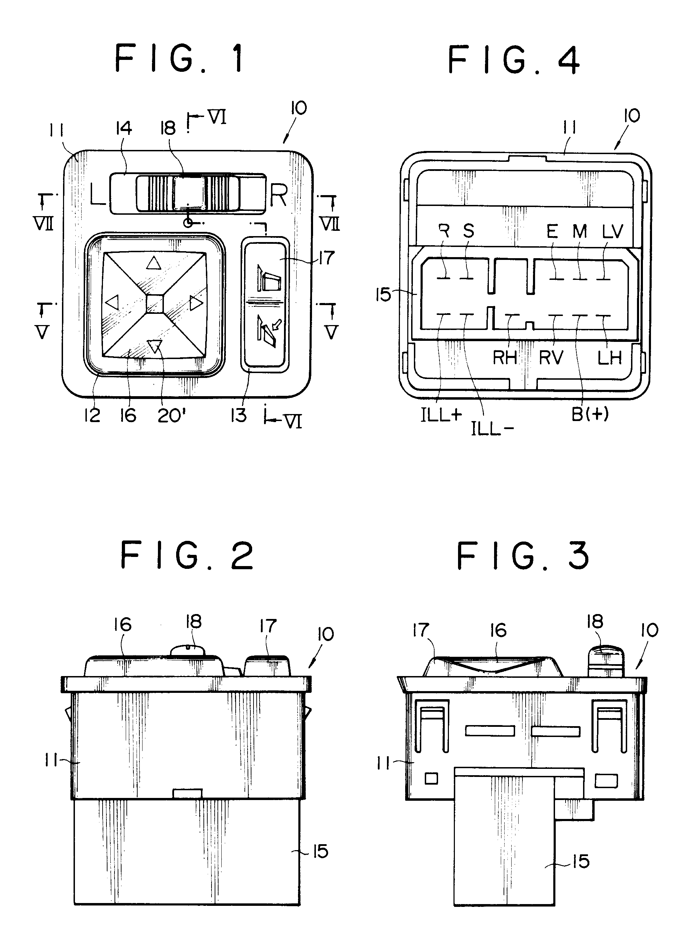

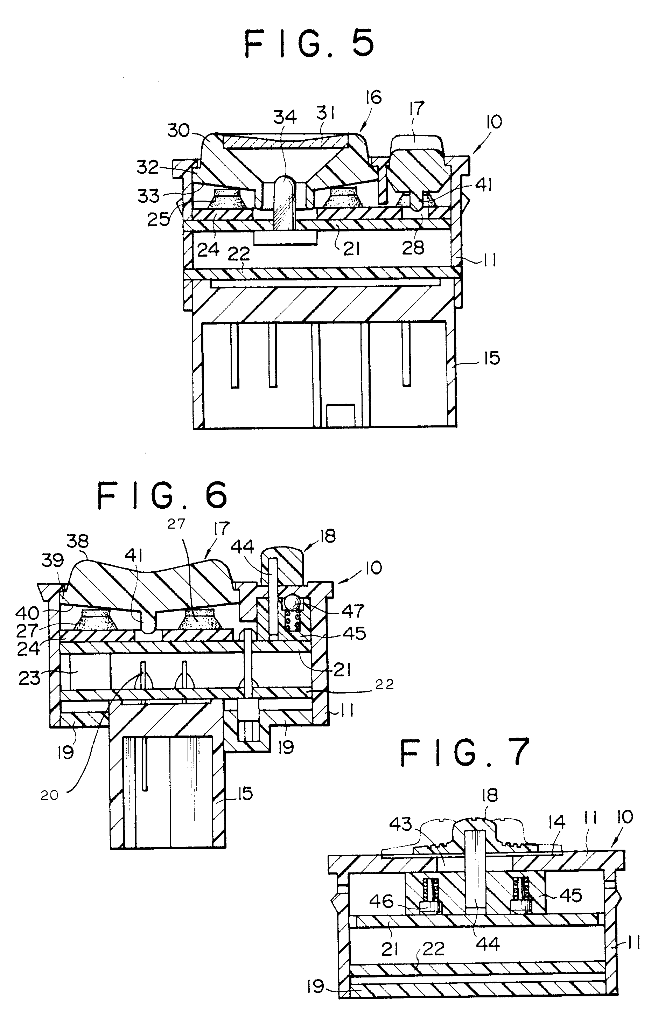

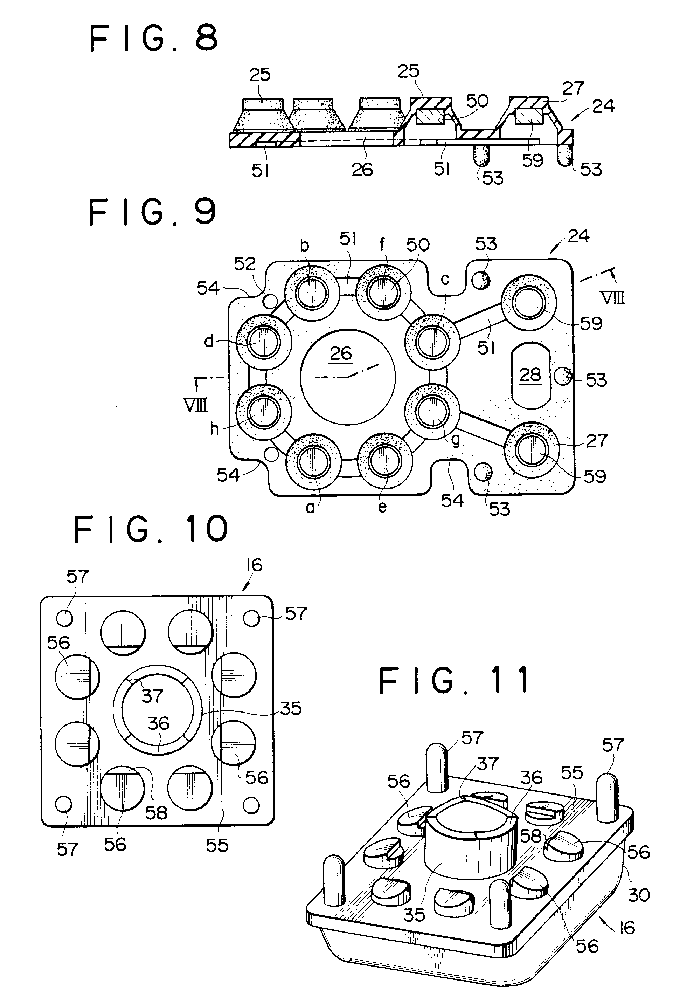

The preferred embodiment of the multi-position electrical switch of the present invention is illustrated generally by way of reference to Figs. 1 to 4. The switch 10 includes a casing 11 having apertures 12, 13 and a recess 14 on the upper surface thereof and a connector 15 fixed to the lower portion of the casing 11. A knob 16 for adjusting the tilting angle of a rearview mirror and a knob 17 for folding the rearview mirror body are tiltably engaged within the apertures 12 and 13, and a knob 18 for selecting either the right or the left rearview mirror is contained movably in the flat recess 14. As shown in Figs. 5 to 7, a cover 19 is fixed to the periphery of the connector 15 on the lower surface of the casing 11, a printed circuit (PC) board 21 and a base plate 22 are laterally disposed at an interval in the casing 11 through a spacer 23 and pins 20 and other leads (not shown) are attached between the PC board 21 and the base plate 22. As shown in Figs. 8 and 9, an insulating rubber sheet 24 is disposed on the PC board 21. Swells 25 each with a movable contact are formed on the sheet 24 in combination with the knob 16 disposed thereon to form an automatic return type multi-position electrical switch.

As shown in Fig. 5, the knob 16 for adjusting the tilting angle of the rearview mirror comprises a knob body 30, for example made of heat resistant ABS, and a lens 31 made of acrylic resin fixed to the upper surface thereof. The planar configuration of the knob body 30 is substantially of square shape, and steps 32 to be engaged with the lower edges of the aperture 12 are formed at the periphery thereof. The bottom of the knob body 30 is, in the embodiment of Fig. 5, formed as a pressing surface 33 of quadrangular prism shape having large vertex (e.g., 80°to 90°), and the pressing surface 33 is provided to press any of the first swells 25 of the insulating sheet 24 disposed under the knob at the time of inclining the knob, as later described in detail.

A cylinder 35 for containing a light emitting element 34, such as an illumination lamp or LED, is projected on a region corresponding to the central portion of the pressing surface 33. The lower end face 36 of the cylinder 35 is formed of four bent surfaces partitioned by peaks 37 corresponding to the diagonal lines of the knob body 30 (Figs. 10 and 11). As will be described in detail with reference to Fig.s 12 to 13, the lower end face 36 is formed in the four curved surfaces formed by intersecting the body of the cylinder 35 and an imaginary quadrangular pyramid on the coaxial core of the cylinder 35 with the angle ϑ formed with the flat surface of the PC board 21 as a vertex when the knob body 30 is pressed to be inclined. Reference character ℓ in the drawings designates the maximum length of the cylinder from its end face, and character m denotes the minimum length thereof. Indexes 20' for indicating the tilting angle of the mirror, i.e., the four adjusting directions in upward, downward, rightward and leftward are marked on the front surface of the lens 31 (Fig. 1).

The knob 17 for setting of folding the rearview mirror is constructed as an automatic return seesaw type pushbutton switch as designated in Figs. 1, 5 and 6, having a knob body 38. Steps 39 are formed on the periphery of the knob body 38, a pressing surface 40 is formed in the bottom to incline toward the center on the bottom, and a projection 41 is formed at the peak of the pressing surface 40. The pressing surface 40 is provided to press one of a pair of second swells (with movable contact) 27 formed on the insulating sheet 24, and the projection 41 is inserted into an opening 28 formed in the insulating sheet 24.

The knob 18 for selecting either the right or left side rearview mirror is part of a slide type switch as designated in Figs. 1, 6 and 7, which further includes an opening 43 perforated at the center of the recess 14 on the upper surface of the casing, a pin 44 suspended downward through the opening 43 from the inner center of the knob 18, a slide block 45 engaged with the lower end of the pin 44, a pair of slide contacts 46 buried in the underside of the slide block 45 to slide on the PC board 21, and notch means 47 for holding right and left switching positions provided on the upper surface of the slide block 45.

The connector 15 attached to the lower portion of the casing 11 has, as shown in Fig. 4, a number of terminals. In this example in Fig. 4, terminals LV, M, E, S, R, ILL+, ILL-, RH, RV, B(+) and LH are disposed for adjusting the vertical direction of the left side rearview mirror, setting and resetting for controlling common installation, rearview mirror body folding by motor driving, applying positive or negative voltage to the light emitting element, adjusting the horizontal direction of the right side rearview mirror, adjusting the vertical direction of the same mirror and connecting a power source, respectively, stated counterclockwise from the terminal LH for adjusting the horizontal direction of the left side rearview mirror at the lower right corner in Fig. 4.

Then, the insulating sheet 24 will be described in detail. As shown in Figs. 8 and 9, there are eight swells 25 for adjusting the rearview mirror angle and two swells 27 for controlling folding of the rearview mirror body on the upper surface of the sheet. A round opening 25 is formed at the left side of the sheet, and the long opening 28 is formed at the right side of the sheet. The first swells 25 are formed at equal intervals at concentrical positions around the outer periphery of the round opening 25, and the second swells 27 are formed at positions opposed with respect to the long opening 28. Movable contacts 50, and 59, respectively, are fixed to the inner top faces of the swells 25, 27, and when the swells are collapsed by the inclination of the respective knob, the respective movable contact is contacted under pressure with stationary contacts (not shown) on the PC board to close the circuit.

Notch-like recesses 51 for allowing air to flow at the time of recovering the swells are formed to improve the flexibility of the swells among the swells as shown. A pore 52 for introducing air into the recesses 51 is provided near one of the first swells 25 and a small projection 53 for positioning itself is provided near each of the second swells 27, and cutouts 54 for receiving the end of a stopper, four such stoppers being suspended from the four corners of the knob 16 for tilting the rearview mirror to be described in detail later, are formed at corners disposed annuarly of the first swells 25.

The knob 16 is preferred to have the pressing surface 33 inclined toward the bottom as shown in Fig. 5, but pressing projections 56 may be formed on the portion contacting the first swells 25, as shown in Figs. 10 to 13. Therein, two pressing projections 56 may be provided at every four sides of the bottom face 55 of the knob 16 around the periphery of the cylinder 35 projected on said bottom face 55, that is, eight projections 56 in total are provided thereto , and the projections 56 are opposed to the first swells 25 of the insulating rubber sheet 24. Steps 58 are formed inside the projections to avoid the interference with the swell 25 deformed at the time of inclining the knob 16. Stoppers 57 for regulating the tilting angle are projected at the four corners of the rear surface 55 of the knob.

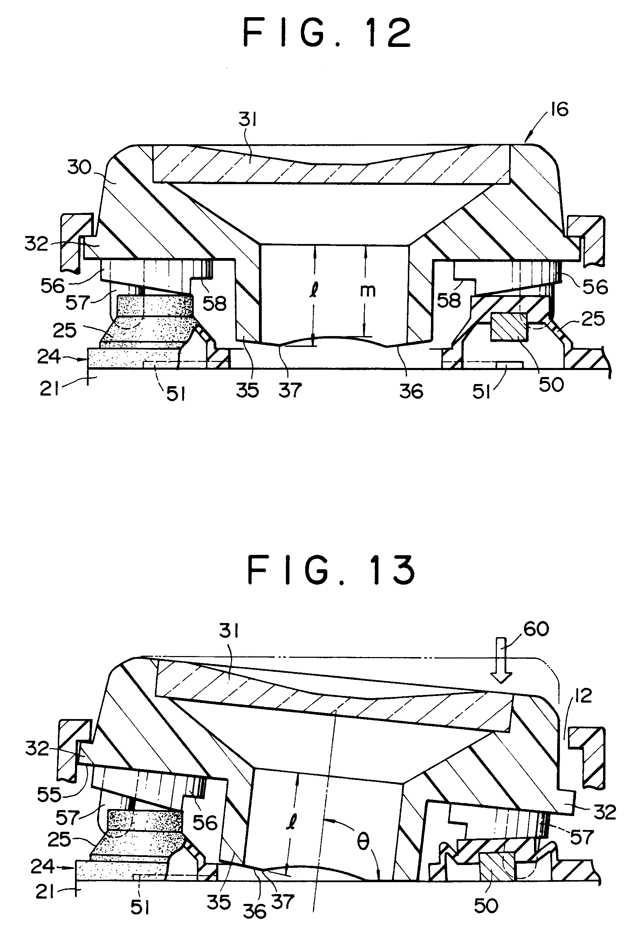

In the knob 16, as shown in Fig. 12, the first swell 25 is returned and erected to lift the projection 56 on the upper surface thereof. Thus, the step 32 of the periphery of the knob is contacted with the inner edge of the aperture 12, and the end face 36 of the cylinder is disposed steadily at the raised position separated from the PC board 21. Therefore, the movable contact 50 is opened from the stationary contacts of the PC board. When the swell is depressed as designated by an arrow 60 of Fig. 13 from this state, the knob body 30 is inclined at the upper edge of the step 32 of the side not depressed (in the left side of the drawing) as a fulcrum while depressing a pair of the swells 25 of the depressed side to close the stationary contacts by pressing the movable contact down. The end face 36 of the cylinder is contacted with the front surface of the PC board 21 at the time of inclining, and is restricted to be further inclined by the right side stoppers 57. Since the end faces 36 and the stoppers 57 actuate individually in the four directions of the knob body, when they are inclined in one direction, only the movable contact of the pair of swells of the corresponding side is contacted ON, but they are not inclined to the other direction to prevent them from erroneously operating. When the pressing is released, the knob is returned to the original state by the elastic force of the swell, and the contact is opened. The knob 17 for folding the rearview mirror is adapted to be pressed forward or rearward with the projection 41 as a fulcrum to collapse either swell 27 to turn ON the movable contact 59, then returning it by releasing the depression. In other words, when the second swells are pressed by inclining the knob, the contact is turned ON, and when recovered, the contact is turned OFF in the same manner as the operation of the first swells.

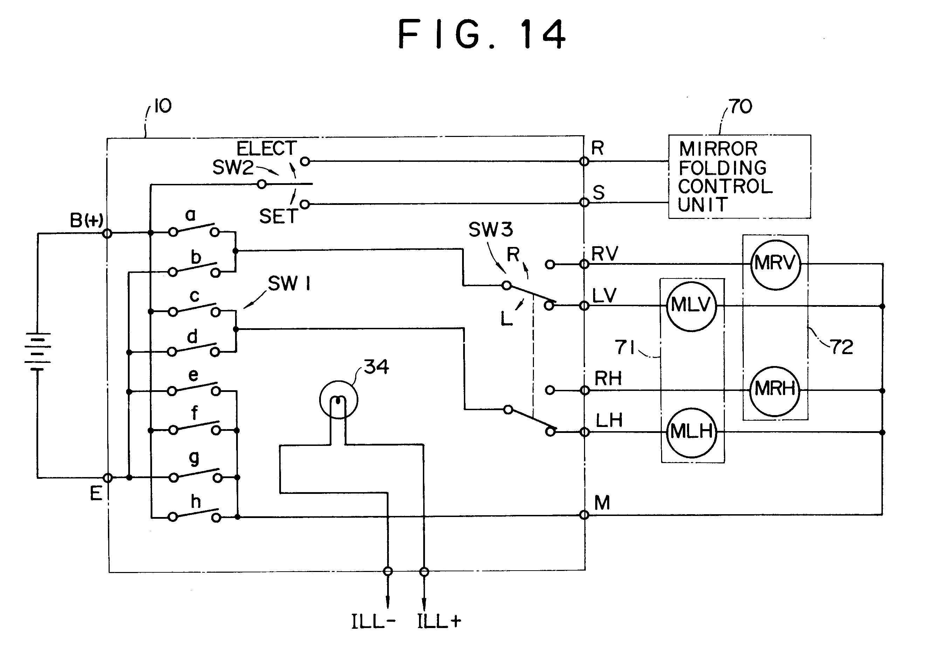

Fig. 14 shows a control circuit diagram of a door rearview mirror with the control switch 10. Left and right door rearview mirrors 71,72 contain electric motors MLV,MRV for adjusting the tilting angle of upward or downward direction of the mirror elements, electric motors MLH,MRH for adjusting the tilting angle of the horizontal direction of the mirror elements, and electric motors (not shown) for folding the elements. Eight movable contacts a,b,c,.., h (represented generally by reference numeral 50 at the movable contacts in Fig. 8) in the first swells disposed under the knob 16 are prepared as switch SW1 for converting the polarity of the electric motors, and are connected to the electric motors MLV,MRV,MLH,MRH through a switch SW3 for selecting the left or right side rearview mirror by the slide contacts 46,46. The folding switch SW2 composed of the movable contact 59 in the second swells is connected to a control unit 70 for folding one of the rearview mirrors through a reset terminal R and a set terminal S . This control unit 70 is composed, for example, of self-holding relay circuits and limit switch group ( not shown respectively) for regulating the rotating angle of the right and left side rearview mirror body.

After the knob 18 of the slide switch for selecting the left or right side rearview mirror is operated to select either the left or right side rearview mirror, when the control knob 16 is inclined, the swells 25 of the respective side are pressed by the pressing projection 56 and become irregularly pressed down so as to press the movable contact 50 of the swell downwardly, thereby closing the stationary contact on the PC board 21. Thus, either the electric motor MLV,MRV,MLH or MRH in the mirror body is driven to adjust the tilting angle of the mirror in the vertical or horizontal direction. The electric motor is continuously driven while the control knob 16 is being depressed, and when the depressing is released, the swell 25 is returned to float the movable contact 50 to open the circuit, thereby stopping the electric motor. Thus, the arbitrary inclination angle of the rearview mirror is adjusted. When the knob 17 is depressed to turn ON the contact of set S or reset R , a signal is input to the control unit 70 to rotate the electric motor (not shown) contained in the mirror body so as to turn the right or left side rearview mirror body from the erected state to the set position, or to erect the rearview mirror body from the set state.

According to the present invention as described above, the cylinder is provided to contain the illumination light emitting element in the operation knob. Therefore, the position of the operation knob can be clearly judged even at the time of driving a vehicle at night, and the operation of the rearview mirror can be easily achieved. As a result that the cylinder is provided, the stability of the operation of the switch is increased as compared with the conventional switch to obtain the insulating distance necessary between the contacts. Further, since the movable contacts are disposed in the swells of the insulating rubber sheet to contact it with the stationary contacts at the time of pressing the knob, the contacting or separating operation of the contacts can be completely performed.

Moreover, since means for regulating the tilting angle is provided under the inclining knob, it can not only prevent the contacts from simultaneously shortcircuiting at the time of depressing the center of the knob, but also prevent the knob from erroneously operating in the direction except the intended direction, thereby achieving the accurate switch operation.

## Claims

1. A multi-position electrical switch unit useable for the rearview mirror (71, 72) control of a motor-vehicle, the switch unit comprising:
a casing (11);
a printed circuit board (21) provided in said casing (11) and supporting an array of stationary contacts of switches;
an insulating rubber sheet (24) arranged on the top side of the printed circuit board (21) and carrying an array of movable contacts (50, 59) of the switches at positions opposite to the stationery contacts (51);
and
a control knob (16) arranged over the top side of the insulating rubber sheet (24) and being inclinable from a rest position corresponding to an axis perpendicular to the printed circuit board, in four radial directions;
the control knob (16) having:
a bottom side (55),
bottom side zones (56) pressing on the rubber sheet (24) when the control knob (16) is tilted, thereby contacting selected movable contacts (50, 59) and opposite stationary contacts,
a central projection (35) projecting from the knob bottom side (55) and extending into an opening (26) of the rubber sheet (24) for engaging the printed circuit board (21), and
four stoppers (57) extending between the knob bottom side (55) and the printed circuit board (21) in areas located between adjacent tilting directions through cutouts (54) in the rubber sheet (24), said stoppers (57) being arranged to delimit the tilting movement of the knob;
characterized in that the central projection (35) is shaped as a cylinder, the free end face (36) of which consists of four inclined surface sectors formed by intersecting the cylinder with an imaginary quadrangular pyramid.

2. A switch unit as claimed in claim 1, characterized in that the imaginary pyramid has a vertex angle which is the complement of the tilting angle (ϑ) of the knob.

3. A switch unit as claimed in claim 1 or 2, characterized by an illuminating light emitting element (34) arranged at the center in the control knob (16).

4. A switch unit as claimed in claim 3, characterized in that said illuminating element (34) is erected on said printed circuit board (21) at a position corresponding to a central portion of said control knob (16) and extends through the cylinder (35) which is a hollow cylinder.

5. A switch unit as claimed in claim 3 or 4, characterized in that said light emitting element (34) is a discharge tube.

6. A switch unit as claimed in claim 3 or 4, characterized in that said light emitting element (34) is a light emitting diode.

## Patentansprüche

1. Elektrische Mehrpositionen-Schaltereinheit, die für die Steuerung eines Rückspiegels (71, 72) eines Kraftfahrzeugs geeignet ist, mit folgenden Teilen:
einem Gehäuse (11);
einer Karte (21) mit gedruckter Schaltung, die sich im Gehäuse (11) befindet und eine Reihe stationärer Schalterkontaktstücke trägt;
einem isolierenden Gummiblatt (24), das auf der Oberseite der Karte (21) mit der gedruckten Schaltung angeordnet ist und eine Reihe von beweglichen Schalterkontaktstücken (50, 59) an Positionen trägt, die den stationären Kontaktstücken (51) gegenüberliegen; und
einem Steuerknopf (16), der über der Oberseite des isolierenden Gummiblatts (24) angeordnet ist und von einer Ruhestellung, die einer zur Karte mit der gedruckten Schaltung rechtwinkligen Achse entspricht, in vier radiale Richtungen neigbar ist;
wobei der Steuerknopf (16) umfaßt:
eine Unterseite (55),
Unterseitenbereiche (56), die auf das Gummiblatt (24) drücken, wenn der Steuerknopf (16) gekippt wird, wodurch ausgewählte bewegliche Kontaktstücke (50, 59) und gegenüberliegende stationäre Kontaktstücke kontaktiert werden,
einen zentralen Vorsprung (35), der von der Unterseite (55) des Knopfs absteht und in eine Öffnung (26) des Gummiblatts (24) zum Angreifen an der Karte (21) mit der gedruckten Schaltung vorsteht, und
vier Anschläge (57), die sich zwischen der Unterseite (55) des Knopfs und der Karte (21) mit der gedruckten Schaltung in Bereichen, die zwischen benachbarten Kipprichtungen liegen, durch Ausschnitte (54) im Gummiblatt (24) erstrecken und dazu angeordnet sind, die Kippbewegung des Knopfs zu begrenzen;
dadurch gekennzeichnet, daß der zentrale Vorsprung (35) als Zylinder geformt ist, dessen freie Endfläche (36) aus vier geneigten Flächensektoren besteht, die durch Schneiden des Zylinders mit einer imaginären vierseitigen Pyramide gebildet sind.

2. Schaltereinheit nach Anspruch 1, dadurch gekennzeichnet, daß die imaginäre Pyramide einen Scheitelwinkel aufweist, der das Komplement des Kippwinkels (ϑ) des Knopfs ist.

3. Schaltereinheit nach Anspruch 1 oder 2, gekennzeichnet durch ein illuminierendes lichtemittierendes Element (34), das am Zentrum des Steuerknopfs (16) angeordnet ist.

4. Schaltereinheit nach Anspruch 3, dadurch gekennzeichnet, daß das illuminierende Element (34) auf der Karte (21) mit der gedruckten Schaltung in einer Stellung aufragt, die einem zentralen Teil des Steuerknopfs (16) entspricht, und durch den Zylinder (35) verläuft, der ein Hohlzylinder ist.

5. Schaltereinheit nach Anspruch 3 oder 4, dadurch gekennzeichnet, daß das lichtemittierende Element (34) eine Entladungsröhre ist.

6. Schaltereinheit nach Anspruch 3 oder 4, dadurch gekennzeichnet, daß das lichtemittierende Element (34) eine lichtemittierende Diode ist.

## Revendications

1. Commutateur multipositions utilisable pour la commande de rétro-viseurs (71, 72) d'un véhicule à moteur, comportant :
- un boîtier (11) ;
- une plaque de circuit imprimé (21) prévue dans ledit boîtier (11) et supportant des contacts fixes de commutation ;
- une feuille isolante en caoutchouc (24) disposée sur le dessus de la plaque de circuit imprimé (21) et portant un ensemble de contacts mobils (50, 59) de commutation dans des positions en opposition avec les contacts fixes (51) ;
- et un bouton de commande (16) disposé du côté supérieur de la feuille isolante en caoutchouc (24) et inclinable à partir d'une position de repos correspondant à un axe perpendiculaire à la plaque de circuit imprimé dans quatre directions radiales ;
- ledit bouton de commande (16) ayant :
. une face inférieure (55),
. des zones (56) sur le côté de la face inférieure appuyant sur la feuille de caoutchouc (24) lorsque le bouton de commande (16) est incliné mettant ainsi en contact des contacts mobiles sélectionnés (50, 59) et des contacts fixes opposés,
. une saillie centrale (35) émergeant à partir de la face inférieure (55) du bouton et s'étendant à travers une ouverture (26) de la feuille de caoutchouc (24) pour prendre appui sur la plaque de circuit imprimé (21) et ,
. quatre butées (57) s'étendant entre les côtés de la face inférieure du bouton (55) et la plaque de circuit imprimé (21) dans des zones situées entre les directions d'inclinaison adjacentes à travers des découpes (54) de feuilles de caoutchouc (24), lesdites butées (57) étant prévues pour limiter le mouvement d'inclinaison du bouton ;
caractérisé en ce que la saillie centrale (35) a la forme d'un cylindre donc la face d'extrémité libre (36) consiste en quatre secteurs à surface inclinée formée par l'intersection du cylindre avec une pyramide quadrangulaire imaginaire.

2. Commutateur selon la revendication 1, caractérisé en ce que la pyramide imaginaire possède un angle au sommet qui est te complément de l'angle d'inclinaison (ϑ) du bouton.

3. Commutateur selon l'une quelconque des revendications 1 ou 2, caractérisé en ce qu'un élément émetteur de lumière (34) est disposé au centre du bouton de commande (16).

4. Commutateur selon la revendication 3, caractérisé en ce que ledit élément (34) s'élève de ladite plaque de circuit imprimée (21) en une position correspondant à la partie centrale dudit bouton de commande (16) et s'étend à travers le cylindre (35) qui est un cylindre creux.

5. Commutateur selon l'une quelconque des revendications 3 ou 4, caractérisé en ce que ledit élément émetteur de lumière (34) est un tube à décharge.

6. Commutateur selon l'une quelconque des revendications 3 ou 4, caractérisé en ce que ledit élément émetteur de lumière (34) est une diode émettrice du lumière.
